Europäisches Patentamt

European Patent Office

Office européen des brevets

(19)

(11) Veröffentlichungsnummer: **0 042 041**
**B1**

(12) # EUROPÄISCHE PATENTSCHRIFT

(45) Veröffentlichungstag der Patentschrift:
**14.12.83**

(51) Int. Cl.³: **C 10 K 1/12**

(21) Anmeldenummer: **81102406.6**

(22) Anmeldetag: **31.03.81**

(54) Verfahren zum Auswaschen von H2S aus Kokereigas.

(30) Priorität: **13.06.80 DE 3022180**

(43) Veröffentlichungstag der Anmeldung:
**23.12.81 Patentblatt 81/51**

(45) Bekanntmachung des Hinweises auf die Patenterteilung:
**14.12.83 Patentblatt 83/50**

(84) Benannte Vertragsstaaten:
**BE FR GB IT LU NL**

(56) Entgegenhaltungen:
**DE - A - 1 494 815**
**DE - A - 2 558 754**

(73) Patentinhaber: **Dr. C. Otto & Comp. Gesellschaft mit beschränkter Haftung, Christstrasse 9, D-4630 Bochum 1 (DE)**

(72) Erfinder: **Ritter, Horst, Bergebuschstrasse 12, D-4300 Essen (DE)**

(74) Vertreter: **Radt, Finkener, Ernesti Patentanwälte, Heinrich-König-Strasse 119, D-4630 Bochum 1 (DE)**

## Verfahren zum Auswaschen von $H_2S$ aus Kokereigas

Die Erfindung betrifft ein Verfahren zum Auswaschen von $H_2S$ aus Kokereigas nach dem Sulfammonverfahren, bei dem der Schwefelwasserstoff zunächst in einem $H_2S$-Wascher mit Ammoniakwasser und anschliessend das im Koksofengas enthaltene Ammoniak durch Auswaschen mit Wasser entfernt wird und die aus dem $H_2S$-Wascher ablaufende Waschflüssigkeit auf den Kopf eines Entsäurers gegeben wird, in dem durch Wasserdampf und gegebenenfalls $NH_3$-Dämpfe aus einem $NH_3$-Abtreiber Schwefelwasserstoff ausgetrieben und einer weiteren Verwertungsanlage, z.B. einer Aufarbeitung zu Schwefelsäure, zugeführt wird, während der Ablauf des Entsäurers als Kreislaufwasser auf den Kopf des $H_2S$-Waschers zurückgeleitet wird, wobei die Anlage einen Waschturm enthält, in dessen unteren Teil beim Ausfall der Anlage zur Weiterverarbeitung der aus dem Entsäurer abgetriebenen $H_2S$-haltigen Schwaden diese Schwaden eingeleitet werden, und in dem sie mit Kohlewasser zur Erzeugung von sogenanntem Starkwasser gewaschen werden, während das den Wascher über Kopf verlassende Gas dem zu reinigenden Koksofengas beigegeben wird.

Bei diesem zum Stande der Technik gehörenden Verfahren wird der Waschturm nur dann in Betrieb genommen, wenn die Anlage zur Weiterverarbeitung der aus dem Entsäurer abgetriebenen Schwaden ausfällt, während er beim Normalbetrieb nicht benutzt wird.

Die Zugabe von gasförmigem Ammoniak in den oberen Abschnitt einer $H_2S$-Waschkolonne ist aus der DE-AS Nr. 1494815 bekannt. Dabei wird bei einem Verfahren zum Auswaschen von Schwefelwasserstoff aus Kokereigasen nach dem Ammoniak-Schwefelwasserstoff-Kreislaufverfahren zusätzlich zu dem bekannten Kreislauf von Ammoniakwasser gasförmiges Ammoniak in Form von Schwaden, die dem Kopf der Ammoniakabtreiberkolonne entnommen werden, in das Oberteil der $H_2S$-Waschkolonne eingeführt.

Der Erfindung liegt die Aufgabe zugrunde, bei dem oben beschriebenen Verfahren den Waschturm auch beim Normalbetrieb einzusetzen und damit die Wirtschaftlichkeit des Verfahrens zu verbessern.

Zu diesem Zweck sieht die Erfindung vor, den Waschturm, wenn die aus dem Entsäurer austretenden Schwaden der Anlage zur Weiterverarbeitung zugeführt werden, dazu zu benutzen, aus dem vom Entsäurer kommenden Kreislaufwasser Ammoniak abzutreiben, wobei ein Teilstrom des Kreislaufwassers von oben und der Mitte des Turms nach unten geleitet und dabei im Gegenstrom mit einem Teil des vom $NH_3$-Wascher kommenden Koksofengases behandelt wird, worauf die aus dem Waschturm austretende Flüssigkeit dem Kreislaufwasser zugegeben wird, das auf den Kopf des $H_2S$-Waschers gelangt, während das durch das Koksofengas gestrippte $NH_3$ etwa in der Mitte auf den $H_2S$-Wascher aufgegeben wird.

Bei einer bevorzugten Ausführungsform der Erfindung ist vorgesehen, das aus dem $H_2S$-Wascher austretende Gas mit einem Gassauger in den $NH_3$-Wascher zu drücken, um ein für die Rückführung des gasförmigen Ammoniaks in den $H_2S$-Wascher ausreichendes Druckgefälle zu erhalten.

Dadurch, dass aus dem Kreislaufwasser, das aus dem Entsäurer austritt und auf den Kopf des $H_2S$-Waschers aufgegeben wird, Ammoniak entfernt wird, verringert sich die $NH_3$-Konzentration in der Waschflüssigkeit, so dass diese mehr $NH_3$ aus dem zu reinigenden Gas aufnehmen kann. Durch die Rückführung von gasförmigem Ammoniak in die Mitte des $H_2S$-Waschers wird die $NH_3$-Konzentration im Gas erhöht, wodurch die selektive Auswaschung von $H_2S$ begünstigt wird.

Auf diese Weise ergibt sich eine äusserst vorteilhafte Verfahrensweise, die darüber hinaus dazu führt, dass der bei derartigen Anlagen ohnehin vorhandene Waschturm auch dann eingesetzt werden kann, wenn die Anlage für die Verarbeitung der aus dem Entsäurer abgetriebenen $H_2S$-haltigen Schwaden ausfällt. Selbstverständlich können auf den Waschturm auch $NH_3$-haltige Wässer aufgegeben werden, die einer anderen Quelle entstammen, beispielsweise das Kondensat der aus einem Ammoniakabtreiber stammenden Dämpfe.

Die Erfindung wird anhand der Zeichnung näher erläutert. Es zeigen:

Fig. 1 das Schema einer bekannten Anlage (ausgezogene Linien) mit einer modifizierten, ebenfalls zum Stande der Technik gehörenden Arbeitsweise beim Ausfall der Aufbereitungsanlage für die aus dem Entsäurer austretenden Schwaden, und

Fig. 2 die Verfahrensweise gemäss vorliegender Erfindung (strichpunktierte Linien) im Vergleich mit dem bekannten Verfahren.

Das zu reinigende Koksofengas tritt durch die Leitung 1 in den $H_2S$-Wascher 2 ein, verlässt ihn am oberen Ende über die Leitung 3 und gelangt über einen Gassauger 4 in den $NH_3$-Wascher 5, in dem das Ammoniak mit über die Leitung 6 zugeführtem Waschwasser ausgewaschen wird. Das gereinigte Gas wird über die Leitung 7 der weiteren Verarbeitung zugeführt. Der $NH_3$-Wascher ist im unteren Teil mit einer Kreislaufkühlung versehen, die aus einer in einer Kreislaufleitung 8 sitzenden Pumpe 9 und einem Wärmeaustauscher 10 besteht. Das aus dem Wascher 5 austretende Waschwasser gelangt über die Leitung 11, eine Pumpe 23 und einen Wärmeaustauscher 13 auf den Kopf des $H_2S$-Waschers 2, in dem es zum Auswaschen des Schwefelwasserstoffs benutzt wird. Die diesen Wascher verlassende Lösung wird über die Leitung 14, eine Pumpe 15, die Wärmeaustauscher 16 und 17, auf den Kopf des Entsäurers 18 gegeben, in dem der in der Flüssigkeit enthaltene Schwefelwasserstoff ausgetrieben wird. Die $H_2S$-haltigen Schwaden werden in einem Wärmeaustauscher 19 gekühlt und einer Aufbereitungsanlage, z.B. einer Schwefelsäureanlage, zugeführt. Die aus dem Entsäurer abfliessende Flüssigkeit wird über die Leitung 20 und den Wärmeaustauscher 17 in den H$_2$S-Wascher 2 zurückgeleitet.

Ein Teilstrom des den Entsäurer 18 verlassenden Wassers wird über eine Leitung 21 in einen Abtreiber 22 eingeleitet, in dem mit über die Leitung 23 zugeführtem Dampf das Ammoniak abgetrieben wird, das über Leitungen 24 und 25 dem Entsäurer zugeführt wird.

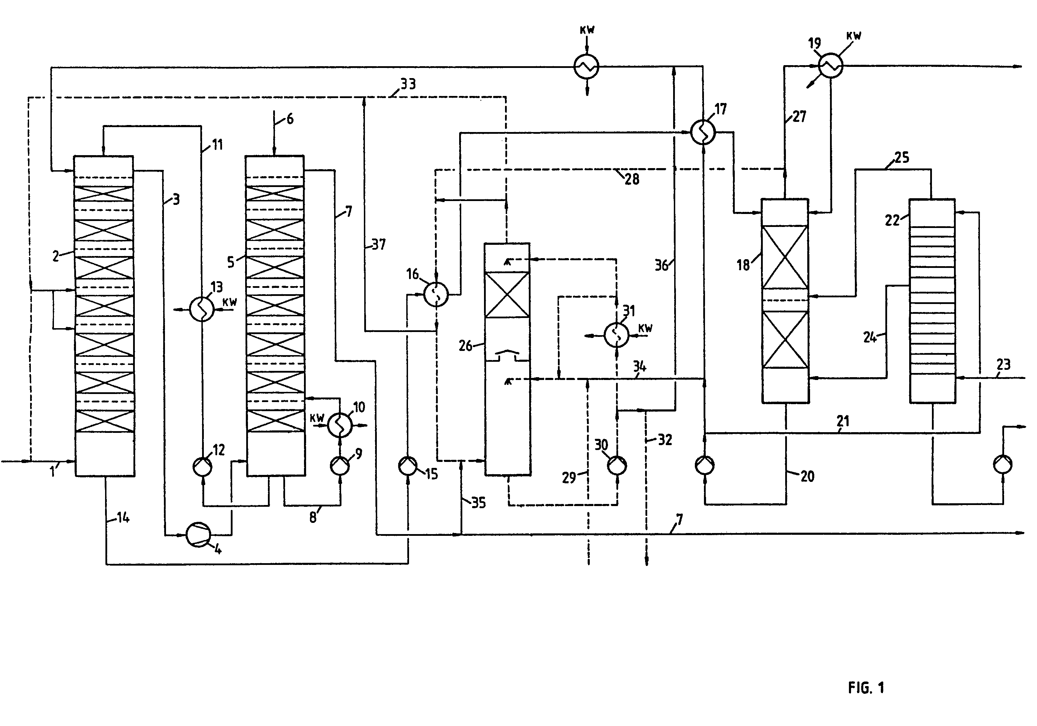

Diese übliche und vielfach angewandte, mit ausgezogenen Linien in Fig. 1 dargestellte Verfahrensweise wurde für einen Betriebsfall modifiziert, der sich einstellt, wenn die Aufbereitungsanlage für die aus dem Entsäurer austretenden Schwaden ausfällt. Zu diesem Zweck hat man in den Kreislauf einen Waschturm 26 eingebaut, der in dem erwähnten Betriebsfall zugeschaltet wird. Dabei werden die aus dem Entsäurer austretenden Schwaden nicht wie vorstehend beschrieben über die Leitung 27 zur Schwefelsäureanlage geleitet, sondern gelangen über eine Leitung 28 und den Wärmeaustauscher 16 in den unteren Teil des Waschturmes 26, in dem sie mit Kohlewasser gewaschen werden, das über eine Leitung 29 auf die Mitte des Turmes aufgegeben wird. Dabei entsteht sogenanntes Starkwasser, das über eine Pumpe 30 und einen Wärmeaustauscher 31 im Kreislauf geführt und teilweise oben und teilweise in der Mitte wieder auf den Waschturm aufgegeben wird. Ein Teilstrom wird über die Leitung 32 abgezogen und gelangt in einen Starkwassertank. Die von dem Kohlewasser nicht adsorbierten Gase werden am oberen Ende des Waschturmes abgezogen und über die Leitung 33 dem zu reinigenden Koksofengas zugemischt.

Dieser Kreislauf ist in Fig. 1 mit gestrichelten Linien dargestellt.

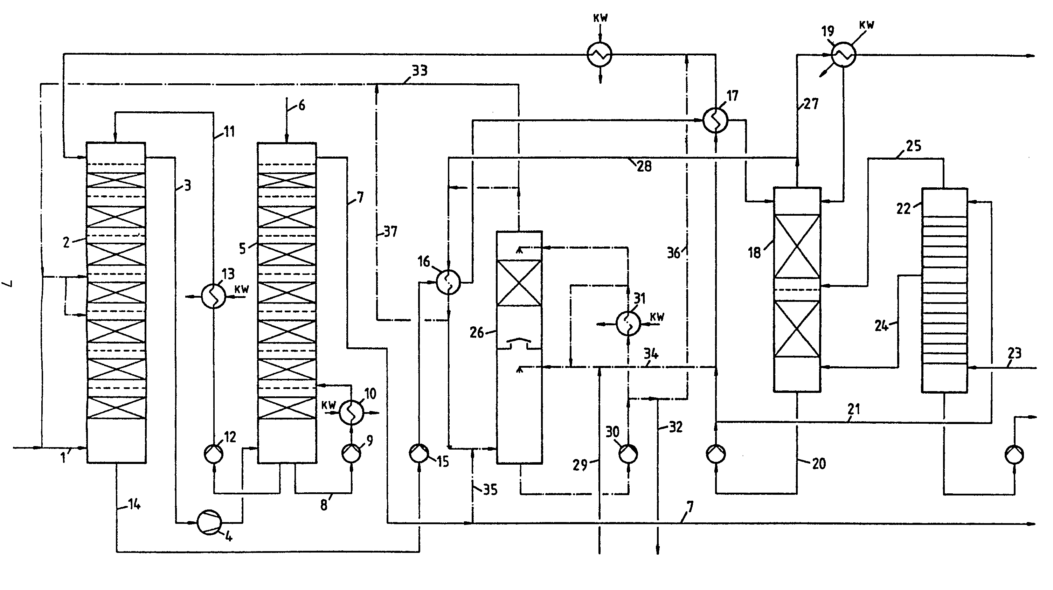

Die erfindungsgemässe Schaltung des Waschturms bei dem mit ausgezogenen Linien dargestellten Normalbetrieb ist mit strichpunktierten Linien in Fig. 2 wiedergegeben. Dabei wird aus der Leitung 20 ein Teilstrom des aus dem Entsäurer austretenden Wassers über die Leitung 34 in den mittleren Teil des Waschturms 26 geleitet, in den von unten gereinigtes Koksofengas eingeführt wird, das aus der Leitung 7 über die Leitung 35 abgezweigt wird. Die unten ablaufende Lösung wird über die Pumpe 30 und den Wärmeaustauscher 31 in der bei der Erzeugung von Starkwasser beschriebenen Weise im Kreislauf geführt und teils oben, teils in der Mitte in den Waschturm zurückgeleitet. Ein Teilstrom wird über die Leitung 36 hinter dem Wärmeaustauscher 17 in die zum H$_2$S-Wascher führende, vom Entsäurer kommende Leitung 20 eingegeben. Über Kopf wird ein Ammoniak enthaltendes Gas aus dem Waschturm 26 abgezogen, das nach Durchgang durch den Wärmeaustauscher 16 über die Leitung 37 in den mittleren Teil des H$_2$S-Waschers eingeleitet wird, wodurch, wie es an sich bekannt ist, der Wirkungsgrad der Auswaschung erheblich gesteigert werden kann.

## Patentansprüche

1. Verfahren zum Auswaschen von H$_2$S aus Kokereigas, bei dem der Schwefelwasserstoff zunächst in einem H$_2$S-Wascher mit Ammoniakwasser und anschliessend das im Koksofengas enthaltene Ammoniak durch Auswaschen mit Wasser entfernt wird und die aus dem H$_2$S-Wascher ablaufende Waschflüssigkeit auf den Kopf eines Entsäurers gegeben wird, in dem durch Wasserdampf und gegebenenfalls NH$_3$-Dämpfe aus einem NH$_3$-Abtreiber Schwefelwasserstoff ausgetrieben und einer weiteren Verwertungsanlage, z.B. einer Aufarbeitung zu Schwefelsäure, zugeführt wird, während der Ablauf des Entsäurers als Kreislaufwasser auf den Kopf des H$_2$S-Waschers zurückgeleitet wird, wobei die Anlage einen Waschturm enthält, in dessen unteren Teil beim Ausfall der Anlage zur Weiterverarbeitung der aus dem Entsäurer abgetriebenen H$_2$S-haltigen Schwaden diese Schwaden eingeleitet werden, und in dem sie mit Kohlewasser zur Erzeugung von sogenanntem Starkwasser gewaschen werden, während das den Wascher über Kopf verlassende Gas dem zu reinigenden Koksofengas beigegeben wird, dadurch gekennzeichnet, dass der Waschturm beim Normalbetrieb, d.h. wenn die aus dem Entsäurer austretenden Schwaden der Anlage zur Weiterverarbeitung zugeführt werden, dazu benutzt wird, aus dem vom Entsäurer kommenden Kreislaufwasser Ammoniak abzutreiben, wobei ein Teilstrom des Kreislaufwassers von oben und der Mitte des Turms nach unten geleitet und dabei im Gegenstrom mit einem Teil des vom NH$_3$-Wascher kommenden Koksofengases behandelt wird, worauf die aus dem Waschturm austretende Flüssigkeit dem Kreislaufwasser zugegeben wird, das auf den Kopf des H$_2$S-Waschers gelangt, während das durch das Koksofengas gestrippte NH$_3$ etwa in der Mitte auf den H$_2$S-Wascher aufgegeben wird.

2. Verfahren nach Anspruch 1, dadurch gekennzeichnet, dass das ammoniakhaltige Gas aus dem H$_2$S-Wascher abgesaugt und in den NH$_3$-Wascher gedrückt wird, um ein für die Rückführung des gasförmigen Ammoniaks ausreichendes Druckgefälle zum H$_2$S-Wascher zu erhalten.

## Claims

1. A process for scrubbing H$_2$S out of coke-oven gas, in which the hydrogen sulphide is first removed in an H$_2$S scrubber with ammonia water and then the ammonia contained in the coke-oven gas is removed by scrubbing with water, and the washing liquid leaving the H$_2$S scrubber is fed to the top of a deacidifier, in which hydrogen sulphide is separated by steam and possibly NH$_3$ vapours from an NH$_3$ separator, and is fed to another processing plant, e.g. for processing to form sulphuric acid, while the deacidifier effluent is recycled to the top of the H$_2$S scrubber as recycle water, the plant containing a scrubbing tower to the bottom part of which the H$_2$S-

containing vapour separated from the deacidifier is fed for further processing in the event of breakdown of the plant, and in which said vapour is scrubbed with carbon water in order to produce strong ammonia water, while the gas leaving the top of the scrubber is added to the coke-oven gas for purification, characterized in that during normal operation, i.e. when the vapour leaving the deacidifier is fed to the further processing plant, the scrubbing tower is utilized for the purpose of separating ammonia from the recycle water coming from the deacidifier, a sub-flow of the recycle water being fed down from the top and the middle of the tower and being treated in countercurrent with part of the coke-oven gas coming from the $NH_3$ scrubber, whereupon the liquid leaving the scrubbing tower is added to the recycle water fed to the top of the $H_2S$ scrubber, while the $NH_3$ stripped by the coke-oven gas is fed to the $H_2S$ scrubber approximately in the middle.

2. A process according to claim 1, characterized in that the ammonia-containing gas is extracted from the $H_2S$ scrubber by suction and forced into the $NH_3$ scrubber in order to provide a pressure gradient to the $H_2S$ scrubber sufficient for recycling the gaseous ammonia.

**Revendications**

1. Procédé pour éliminer par lavage le $H_2S$ d'un gaz de cokerie, dans lequel l'acide sulfhydrique est tout d'abord éliminé dans un laveur de $H_2S$ avec de l'eau ammoniacale, puis l'ammoniac contenu dans le gaz de cokerie est éliminé par lavage avec de l'eau, et le liquide de lavage s'écoulant du laveur de $H_2S$ est fourni à la tête d'un désacidificateur, dans lequel de l'acide sulfhydrique est expulsé d'un expulseur de $NH_3$ au moyen de vapeur d'eau, et éventuellement de vapeurs de $NH_3$, et est envoyé à une autre installation de transformation, par exemple de retraitement pour obtenir de l'acide sulfurique, tandis que l'écoulement du désacidificateur est ramené, en tant qu'eau de recyclage, à la tête du laveur de $H_2S$, l'installation comportant une tour de lavage dans la partie inférieure de laquelle, dans le cas d'une panne de l'installation pour le traitement ultérieur des vapeurs de $H_2S$ entraînées hors du désacidificateur, sont introduites ces vapeurs, et dans laquelle elles sont lavées avec de l'eau carbonée pour produire de l'eau dite forte, tandis que le gaz quittant le laveur par l'intermédiaire de la tête est ajouté au gaz de cokerie devant être nettoyé, caractérisé par le fait que la tour de lavage est utilisée en service normal, c'est-à-dire lorsque les vapeurs qui sortent du désacidificateur sont envoyées à l'installation pour le traitement ultérieur, pour extraire l'ammoniac de l'eau de recyclage provenant du désacidificateur, un courant partiel de l'eau de recyclage étant envoyé vers le bas, à partir du haut et du milieu de la tour, et ce faisant étant traité à contre-courant avec une partie du gaz de cokerie provenant du laveur de $NH_3$, à la suite de quoi le liquide sortant de la tour de lavage est ajouté à l'eau de recyclage qui arrive à la tête du laveur de $H_2S$, tandis que le $NH_3$ réextrait par le gaz de cokerie est fourni au laveur de $H_2S$, sensiblement au milieu.

2. Procédé suivant la revendication 1, caractérisé par le fait que le gaz contenant de l'ammoniac est aspiré hors du laveur de $H_2S$ et est mis sous pression dans le laveur de $NH_3$ pour obtenir une chute de pression suffisante pour le renvoi de l'ammoniac gazeux vers le laveur de $H_2S$.

0 042 041

FIG. 1

0 042 041